# EUROPEAN PATENT SPECIFICATION

(11) **EP 2 546 549 B1**
(45) Date of publication and mention of the grant of the patent: **18.06.2014**
(21) Application number: 12174530.1
(22) Date of filing: 29.06.2012
(51) Int. Cl.: F16H 55/18

(54) **Gear train with no backlash**
Getriebezug ohne Spiel
Train d'engrenages sans jeu

(30) Priority: 11.07.2011 NL 2007083
(43) Date of publication of application: 16.01.2013
(73) Proprietor: VCST Industrial Products BVBA, 3800 Sint-Truiden (BE)
(72) Inventor: Lieshout, van, Steven, 2440 Geel (BE); Vandewal, Bart, B-3970 Alken (BE)
(74) Representative: Verhees, Godefridus Josephus Maria

(56) References cited:
- EP-A1- 1 174 592
- EP-A2- 0 893 625
- US-A- 2 966 806
- US-A- 3 361 002
- US-A1- 2002 121 152

## Description

### Technical filed of the invention

The invention relates to a gear train comprising at least three toothed gear wheels of which neighboring gear wheels are meshing with each other of which two gear wheels are end gear wheels and the at least one further gear wheel is an intermediate gear wheel, one of the at least three gear wheels is a composite gear wheel comprising two concentric sub gear wheels which are disposed in face to face relation, which composite gear wheel further comprises a spring interconnecting both sub gear wheels, such that both sub gear wheels can be turned around their mutual axes over an angle with respect to each other against the spring force. More particularly the invention relates to a gear train where no backlash is permitted. One of the end gear wheels is a driving gear wheel and the other end gear wheel is a driven gear wheel.

The composite end gear wheel is a so called scissor gear wheel. The sub gear wheels are in face to face relation to function as a single gear wheel. The sub gear wheels are angularly offset from each other by one or more springs, the offset amounting to a fraction of a gear tooth. Thus the net effect is to maintain a tight fit between meshing gear teeth so that all backlash with one adjacent gear wheel is eliminated.

### Background of the invention

Such a gear train is known from WO 2004/044461 A. In case this known gear train comprises three gear wheels the middle gear wheel should be a composite gear wheel with spring biased sub gear wheels to avoid backlash, one spring biased sub gear wheel per gear mesh. In case this known gear train comprising more than two gear wheels every second gear wheel should be a composite gear wheel. Further, the composite gear wheel has three sub gear wheels and therefore is relatively wide.

### Summary of the invention

It is an object of the present invention to provide a gear train of the type defined in the opening paragraph, which gear train when comprising more gear wheels needs less composite gear wheels having spring biased sub gear wheels than the known gear train and the composite gear wheel can be less wide than that of the known gear train. To this end the gear train according to the invention is **characterized in that** one of the end wheels is the composite gear wheel and the at least one intermediate gear wheel is a further composite gear wheel comprising two concentric further sub gear wheels which are disposed in face to face relation and can be turned around their mutual axes over an angle with respect to each other, in which gear train one of the sub gear wheels is meshing with one of the further sub gear wheels and the other sub gear wheel is meshing with the other further sub gear wheel and at least one of the further sub gear wheels is meshing with the other end gear wheel. The gear train may comprise four or more gear wheels of which all intermediate gear wheels are further composite gear wheels. With only one of the gear wheels being a composite gear wheel comprising spring biased sub gear wheels, the whole gear train is free of backlash, no matter how many gear wheels are in the gear train under the condition that all intermediate gear wheel are composite gear wheels, which do not have to have a spring coupling both sub gear wheels. Further, because no composite gear wheel has more than three sub gear wheels the composite gear wheels are less wide than that of the known gear train.

The spring of the composite end gear wheel is preferably an annular torsion spring which is integrally formed with one of the sub gear wheels. The composite intermediate gear wheel is a so called split gear wheel.

An embodiment of the gear train according to the invention is **characterized in that** of the further sub gear wheels one gear wheel comprises a concentric bushing which extends into a central opening in the other gear wheel which can turn around the bushing and therefore has not to be journalled.

Preferably the further sub gear wheel having the concentric bushing is wider that the other gear wheel that can turn around the bushing.

In one embodiment of the gear train according to the invention also the other further sub gear wheel is meshing with the other end gear wheel. In this case, preferably, the sub gear wheels and/or the further sub gear wheels have the same number of teeth.

In another embodiment of the gear train according to the invention also the other end gear wheel is a composite gear wheel comprising two concentric sub gear wheels which are disposed in face to face relation, which sub gear wheels of the other end gear wheel are fixed to each other in rotational direction. In this case the sub gear wheels of a gear wheel don't have to have the same number of teeth and can have different shaped teeth. One of the sub gear wheels can be of any type, like for example a straight-toothed gear wheel or a gear wheel with straight oblique teeth and the other sub gear wheel can be die-cut.

### Brief description of the drawings

The invention will be further elucidated below on the basis of drawings. These drawings show embodiments of the gear train according to the present invention. In the drawings:
Figure 1 a first embodiment of the gear train in front view;
Figure 2 the gear train as shown in figure 1 in side view;
Figure 3 the gear train as shown in figure 1 in perspective view;
Figure 4 a second embodiment of the gear train in front view;
Figure 5 the gear train as shown in figure 4 in side view;
Figure 6 the gear train as shown in figure 4 in perspective view;
Figure 7 a third embodiment of the gear train in front view;
Figure 8 the gear train as shown in figure 7 in side view; and
Figure 9 the gear train as shown in figure 7 in perspective view.

### Detailed description of the drawings

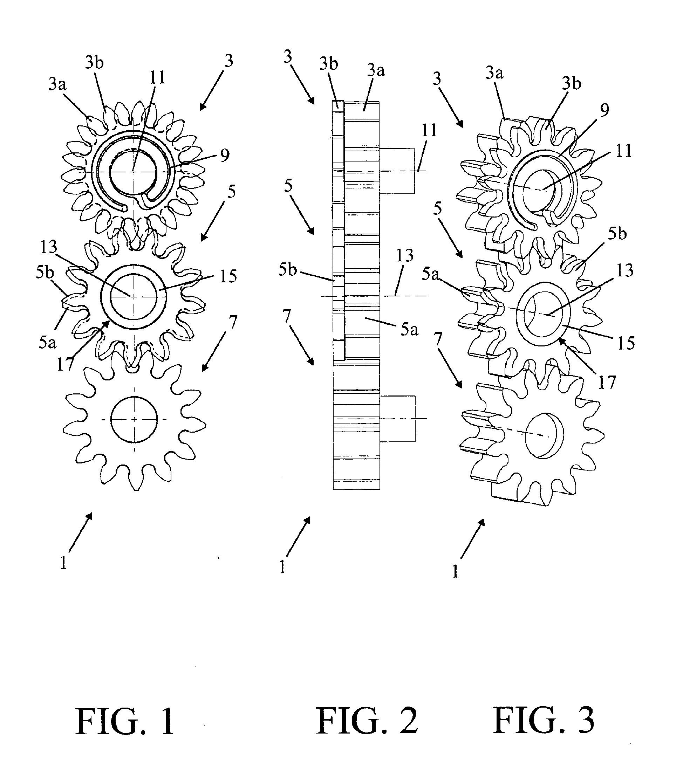

In figures 1, 2 and 3 a first embodiment of the gear train according to the invention is shown in front, side and perspective view respectively. The gear train 1 comprises three toothed gear wheels 3, 5 and 7. Gear wheels 3 and 7 are end gear wheels of which end gear wheel 3 is a driving gear wheel and end gear wheel 7 is a driven gear wheel. Gear wheel 5 is an intermediate gear wheel which meshes with both end gear wheels 3 and 7.

Gear wheels 3 and 5 are composite gear wheels, each comprising two concentric sub gear wheels 3a, 3b and 5a, 5b which are disposed in face to face relation and the same number of teeth. Composite gear wheel 3 further comprises a spring 9 interconnecting both sub gear wheels 3a and 3b, such that both sub gear wheels can be turned around the mutual axis 11 over an angle with respect to each other against the spring force. Composite gear wheel 5 also comprises two concentric further sub gear wheels 5a and 5b which are disposed in face to face relation and the same number of teeth and can be turned around a mutual axis 13 over an angle with respect to each other. However, these further sub gear wheels 5a and 5b are not coupled to each other by a spring.

The composite end gear wheel 3 is a so called scissor gear wheel. The sub gear wheels 3a and 3b function as a single gear wheel and are angularly offset from each other by the spring 7. The offset amounting to a fraction of a gear tooth. The effect is to maintain a tight fit between meshing gear teeth so that all backlash with the adjacent gear wheel 5 is eliminated, not only the backlash of the adjacent gear wheel 5 but the offset is also taken up the amount of backlash between the meshing gears 5 and 7. The spring 7 of the composite end gear wheel 3 is an annular torsion spring which is integrally formed with sub gear wheel 3a.

The composite intermediate gear wheel 5 is a so called split gear wheel. Sub gear wheel 3a and further sub gear wheel 5a are wider than sub gear wheel 3b and further sub gear wheel 5b. Sub gear wheel 5a has a concentric bushing 15 which extends into a central opening 17 in the narrow sub gear wheel 5b. This sub gear wheel 5b can rotate around the bushing. The sub gear wheel 3a is only meshing with the further sub gear wheel 5a and sub gear wheel 3b is only meshing with the further sub gear wheel 5b. Both further sub gear wheels 5a and 5b are meshing with the other end gear wheel 7. In the gear train 1 backlash is avoided.

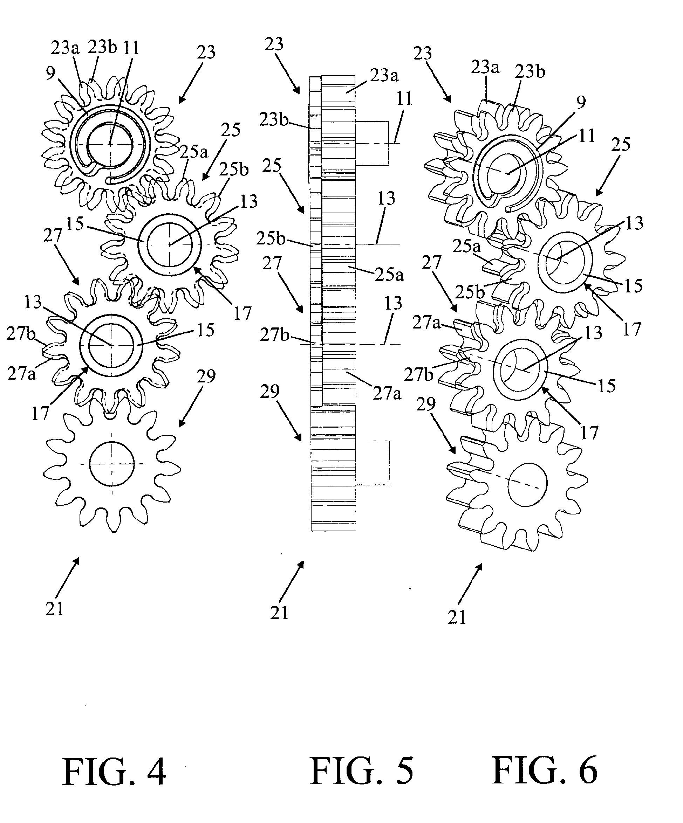

In figures 4, 5 and 6 a second embodiment of the gear train according to the invention is shown in front, side and perspective view respectively. All parts which are the same or similar with those of the first embodiment are indicated with the same reference signs. This gear train 21 comprises four toothed gear wheels 23, 25, 27 and 29. Gear wheels 23 and 29 are end gear wheels and gear wheels 25 and 27 are intermediate gear wheels which meshes with the end gear wheels 23 and 29. All intermediate gear wheels and one of the end gear wheels are composite gear wheels each comprising two sub gear wheels 23a, 23b, 25a, 25b and 27a, 27b. Also in this gear train 21 backlash is avoided.

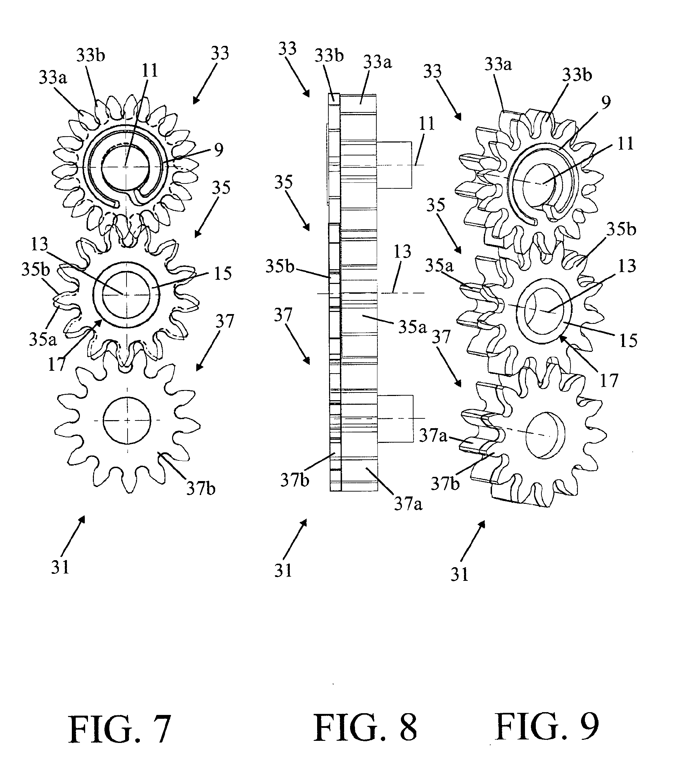

In figures 7, 8 and 9 a third embodiment of the gear train according to the invention is shown in front, side and perspective view respectively. All parts which are the same or similar with those of the first embodiment are indicated with the same reference signs. In this gear train 31 also the other end gear wheel 37 is a composite gear wheel comprising two concentric sub gear wheels 37a and 37b which are disposed in face to face relation. These sub gear wheels 37a and 37b are fixed to each other in rotational direction.

In this third embodiment the sub gear wheels 33a and 33b, 35a and 35b and 37a and 37b don't have to have the same number of teeth. Further, the sub gear wheels of the same gear wheel can have different shaped teeth, for example the sub gear wheels 33a, 35a and 37a can have straight oblique teeth (not shown in the drawings) and the sub gear wheels 33b, 35b and 37b can be straight-toothed gear wheels that can be die-cut.

Although the present invention is elucidated above on the basis of the given drawings, it should be noted that this invention is not limited whatsoever to the embodiments shown in the drawings. The invention also extends to all embodiments deviating from the embodiments shown in the drawings within the context defined by the claims. In the drawings the sub gear wheels of the composite gear wheels have the same diameter. However, preferable the sub gear wheels don't have the same diameter, as long as the overall transmission ratio of the narrow gear wheels is the same as that of the wide gear wheels.

## Claims

1. Gear train (1;21;31) comprising at least three toothed gear wheels (3,5,7;23,25,27,29;33,35,37) of which neighboring gear wheels are meshing with each other and of which two gear wheels (3,7;23,29;33,37) are end gear wheels and the at least one further gear wheel (5;25,27;35) is an intermediate gear wheel, one of the at least three gear wheels being a composite gear wheel comprising two concentric sub gear wheels (3a,3b;23a,23b;33a,33b) which are disposed in face to face relation, which composite gear wheel further comprises a spring (9) interconnecting both sub gear wheels, such that both sub gear wheels can be turned around their mutual axis (11) over an angle with respect to each other against the spring force, **characterized in that** one of the end gear wheels (3;23;33) is the composite gear wheel and the at least one intermediate gear wheel (5;25,27;35) is a further composite gear wheel comprising two concentric further sub gear wheels (5a,5b;25a,25b;35a,35b) which are disposed in face to face relation and can be turned around their mutual axis (13) over an angle with respect to each other, in which gear train (1;21;31) one of the sub gear wheels (3a;23a;33a) is meshing with one of the further sub gear wheels (5a;25a;35a) and the other sub gear wheel (3b;23b;33b) is meshing with the other further sub gear wheel (5b;25b;35b) and at least one of the further sub gear wheels (5a;27a;35a) is meshing with the other end gear wheel (7;29;37).

2. Gear train (1;21;31) according to claim 1, **characterized in that** of the further sub gear wheels one gear wheel (5a;25a,27a;35a) comprises a concentric bushing (15) which extends into a central opening (17) in the other gear wheel (5b;25b,27b;35b) which can turn around the bushing.

3. Gear train (1;21;31) according to claim 2, **characterized in that** the further sub gear wheel (5a;25a,27a;35a) having the concentric bushing (15) is wider than the other further hub gear wheel (5b;25b,27b;35b) that can turn around the bushing.

4. Gear train (1;21) according to claim 1, 2 or 3, **characterized in that** the two further sub gear wheels (5b;27b) are meshing with the other end gear wheel (7;29).

5. Gear train (1;21) according to claim 4, **characterized in that** the sub gear wheels (3a,3b;23a,23b) and/or the further sub gear wheels (5a,5b;25a,25b,27a,27b) have the same number of teeth.

6. Gear train (31) according to claim 1, 2 or 3, **characterized in that** also the other end gear wheel (37) is a composite gear wheel comprising two concentric sub gear wheels (37a,37b) which are disposed in face to face relation, which sub gear wheels (37a,37b) of the other end gear wheel (37) are fixed to each other in rotational direction.

## Patentansprüche

1. Zahnradgetriebe (1;21;31), bestehend aus mindestens drei Zahnrädern (3,5,7;23,25,27,29;33,35,37), wobei benachbarte Zahnräder ineinandergreifen und zwei Zahnräder (3,7;23,29;33,37) Endzahnräder sind und mindestens ein weiteres Zahnrad (5;25,27;35) ein Zwischenzahnrad ist, wobei eines der mindestens drei Zahnräder ein mehrteiliges Zahnrad ist, bestehend aus zwei Unterzahnrädern (3a,3b;23a,23b;33a,33b), die einander seitlich gegenüberstehen, welches mehrteilige Zahnrad ferner eine Feder (9) enthält, die die beiden Unterzahnräder so miteinander verbindet, dass die beiden Unterzahnräder entgegen der Federkraft in einem Winkel zueinander um ihre gemeinsame Achse (11) drehen können, **dadurch gekennzeichnet, dass** eines der Endzahnräder (3;23;33) das mehrteilige Zahnrad ist und mindestens ein Zwischenzahnrad (5;25,27;35) ein weiteres mehrteiliges Zahnrad ist, das aus zwei weiteren Unterzahnrädern (5a,5b;25a,25b;35a,35b) besteht, die einander seitlich gegenüberstehen und in einem Winkel zueinander um ihre gemeinsame Achse (13) drehen können, wobei im Zahnradgetriebe (1;21;31) eines der Unterzahnräder (3a;23a;33a) in eines der weiteren Unterzahnräder (5a;25a;35a) eingreift, und das andere Unterzahnrad (3b;23b;33b) in das andere weitere Unterzahnrad (5b;25b;35b) eingreift und mindestens eines der weiteren Unterzahnräder (5a;27a;35a) in das andere Endzahnrad (7;29;37) eingreift.

2. Zahnradgetriebe (1;21;31) nach Anspruch 1, **dadurch gekennzeichnet, dass** von den weiteren Unterzahnrädern ein Unterzahnrad (5a;25a,27a;35a) eine konzentrische Buchse (15) enthält, die sich in eine zentrale Öffnung (17) im anderen Unterzahnrad (5b;25b,27b;35b) erstreckt, das drehbar um die Buchse ist.

3. Zahnradgetriebe (1;21;31) nach Anspruch 2, **dadurch gekennzeichnet, dass** das weitere Unterzahnrad (5a;25a,27a;35a) mit der konzentrischen Buchse (15) breiter als das andere Unterzahnrad (5b;25b,27b;35b) ist, das drehbar um die Buchse ist.

4. Zahnradgetriebe (1;21) nach Anspruch 1, 2 oder 3, **dadurch gekennzeichnet, dass** auch das andere weitere Unterzahnrad (5b;27b) in das andere Endzahnrad (7;29) eingreift.

5. Zahnradgetriebe (1;21) nach Anspruch 4, **dadurch gekennzeichnet, dass** die Unterzahnräder (3a,3b;23a,23b) und/oder die weiteren Unterzahnräder (5a,5b;25a,25b,27a,27b) die gleiche Anzahl Zähne haben.

6. Zahnradgetriebe (31) nach Anspruch 1, 2 oder 3, **dadurch gekennzeichnet, dass** auch das andere Endzahnrad (37) ein mehrteiliges Zahnrad ist, bestehend aus zwei konzentrischen Unterzahnrädern (37a,37b), die einander seitlich gegenüberstehen und welche Unterzahnräder (37a,37b) vom anderen Endzahnrad (37) in Rotationsrichtung in Bezug zueinander fixiert sind.

## Revendications

1. Train d'engrenages (1;21;31) comprenant au moins trois engrenages (3,5,7;23,25,27,29;33,35,37) dont les engrenages adjacents s'engrènent l'un dans l'autre et dont deux engrenages (3,7;23,29;33,37) sont des engrenages d'extrémité et l'au moins deuxième engrenage (5;25,27;35) est un engrenage intermédiaire, où l'un des 'au moins trois engrenages' est un engrenage composé qui comprend deux sous-engrenages concentriques (3a,3b;23a,23b;33a,33b) se trouvant face à face, lequel engrenage composé comprend de plus un ressort (9) reliant les deux sous-engrenages, de telle sorte que les deux sous-engrenages peuvent tourner contre la force de rappel du ressort autour de leurs axes mutuels (11) sur un angle l'un par rapport à l'autre, **caractérisé en ce que** l'un des engrenages d'extrémité (3;23;33) est l'engrenage composé et le 'au moins un engrenage' intermédiaire (5;25,27;35) est un deuxième engrenage composé comprenant deux deuxièmes sous-engrenages concentriques (5a,5b;25a,25b;35a,35b) se trouvant face à face et pouvant tourner autour de leurs axes mutuels (13) sur un angle l'un par rapport à l'autre, train d'engrenages (1;21;31) dans lequel l'un des sous-engrenages (3a;23a;33a) s'engrène dans l'un des deuxièmes sous-engrenages (5a;25a;35a) et l'autre sous-engrenage (3b;23b;33b) s'engrène dans l'autre deuxième sous-engrenage (5b;25b;35b) et au moins l'un des deuxièmes sous-engrenages (5a;27a;35a) s'engrène dans l'autre engrenage d'extrémité (7;29;37).

2. Train d'engrenages (1;21;31) selon la revendication 1, **caractérisé en ce qu'**un sous-engrenage (5a;25a,27a;35a) des deuxièmes sous-engrenages comprend un manchon concentrique (15) qui s'étend à l'intérieur d'une ouverture centrale (17) dans l'autre sous-engrenage (5b;25b,27b;35b) pouvant tourner autour du manchon.

3. Train d'engrenages (1;21;31) selon la revendication 2, **caractérisé en ce que** le deuxième sous-engrenage (5a;25a,27a;35a) qui est pourvu du manchon concentrique (15) est plus large que l'autre sous-engrenage (5b;25b,27b;35b) pouvant tourner autour du manchon.

4. Train d'engrenages (1;21) selon la revendication 1, 2 ou 3, **caractérisé en ce qu'**également l'autre deuxième sous-engrenage (5b;27b) s'engrène dans l'autre engrenage d'extrémité (7;29).

5. Train d'engrenages (1;21) selon la revendication 4, **caractérisé en ce que** les sous-engrenages (3a,3b;23a,23b) et/ou les deuxièmes sous-engrenages (5a,5b;25a,25b,27a,27b) ont le même nombre de dents.

6. Train d'engrenages (31) selon la revendication 1, 2 ou 3, **caractérisé en ce qu'**également l'autre engrenage d'extrémité (37) est un engrenage composé qui comprend deux sous-engrenages concentriques (37a,37b) se trouvant face à face, lesquels sous-engrenages (37a,37b) de l'autre engrenage d'extrémité (37) sont fixés l'un à l'autre dans le sens de rotation.
